# EUROPÄISCHE PATENTSCHRIFT

(11) **EP 3 066 157 B1**
(45) Veröffentlichungstag und Bekanntmachung des Hinweises auf die Patenterteilung: **26.09.2018**
(21) Anmeldenummer: 14789791.2
(22) Anmeldetag: 14.10.2014
(51) Int. Cl.: C09C 1/00, H01B 3/00, H01B 13/00, C09D 5/24, C08K 3/00, C08K 3/22, C09D 101/02, C08K 3/34, H01B 1/08, C08K 9/10, C09D 7/62, C09D 7/40

(54) **ELEKTRISCH LEITFÄHIGES PIGMENT**
ELECTRICALLY CONDUCTIVE PIGMENT
PIGMENT ÉLECTRIQUEMENT CONDUCTEUR

(30) Priorität: 07.11.2013 EP 13005255
(43) Veröffentlichungstag der Anmeldung: 14.09.2016
(73) Patentinhaber: Merck Patent GmbH, 64293 Darmstadt (DE)
(72) Erfinder: RUEGER, Reinhold, 63322 Rödermark (DE); KLEIST, Bjoern, 67578 Gimbsheim (DE)
(86) Internationale Anmeldenummer: PCT/EP2014/002771
(87) Internationale Veröffentlichungsnummer: WO 2015/067337

(56) Entgegenhaltungen:
- EP-A1- 0 139 557
- WO-A1-2012/072174
- DE-A1- 3 237 990
- DE-A1-102005 018 615

## Beschreibung

Die vorliegende Erfindung betrifft elektrisch leitfähige Pigmente, ein Verfahren zu deren Herstellung sowie deren Verwendung, insbesondere in antistatischen oder ableitfähigen Artikeln oder Oberflächen, beispielsweise in Farben, Lacken, Druckfarben oder Fußbodenbelägen.

In Bereichen, in denen durch Reibung statische Aufladungen von Artikeln oder Oberflächen entstehen können, deren Energie in Form von elektrischen Entladungen abgegeben werden kann, werden ableitfähige Oberflächen dringend benötigt und meist auch standardmäßig eingesetzt. Statische Aufladungen entstehen in der Regel durch Reibung unterschiedlicher Materialien aneinander. Durch plötzliche Entladung der statischen Aufladungen können sowohl Schäden an technischen Einrichtungen als auch Personenschäden auftreten. Eine häufige Form der elektrostatischen Aufladung entsteht durch einfaches Begehen von Fußböden. Dies kann zu Aufladungen der Schuhsohlen, des Menschen selbst oder der Bodenfläche führen und eine spürbare Funkenentladung hervorrufen, die zu Beschädigungen von im Raum befindlichen Geräten und Anlagen führen kann. Gravierende Folgen haben derartige Entladungen beispielsweise in Operationssälen, in Räumen mit empfindlicher Elektronik oder in Bereichen, in denen explosionsfähige Gase oder Stäube freigesetzt werden können.

Es ist daher guter Standard, gefährdete Bereiche und Geräte mit antistatischen Beschichtungen oder antistatischer Ausrüstung zu versehen. Beispielsweise werden Kunststoffe, Fasern und Gewebe, insbesondere aber Fußbodenbeläge in verschiedensten Bereichen, antistatisch ausgerüstet. Hierzu werden in die entsprechenden Materialien oft elektrisch leitfähige Pigmente eingearbeitet, die eine schnelle Ableitung der entstandenen Ladung bei entsprechender Erdung ermöglichen.

Als Maß für die Fähigkeit statische Entladungen abführen zu können ist die Ableitfähigkeit. Die Höhe der Ableitfähigkeit wird nach dem elektrischen Widerstand des jeweiligen Materials, gemessen in Ohm, bestimmt. Je höher der elektrische Widerstand ist, umso geringer ist die Ableitfähigkeit des entsprechenden Materials. Allerdings soll für technische Anwendungen oder Fußbodenbeläge der elektrische Widerstand nicht unbegrenzt gering sein, denn eine direkte elektrische Leitfähigkeit der entsprechenden Materialien ist in der Regel weder notwendig noch erwünscht. Vielmehr sollte die elektrische Ableitfähigkeit von beispielsweise Bodenbelägen so ausgestaltet sein, dass eine elektrostatische Aufladung zwar vermieden wird, aber Menschen bei gleichzeitiger Berührung von Spannungsquellen und Bodenbelag keinen körperschädigenden Stromdurchfluss erleiden. Als Richtwert der Ableitfähigkeit von Bodenbelägen gilt in der Regel ein Widerstand von ≤ 10⁹ Ohm.

Obwohl derzeit für die Herstellung der Ableitfähigkeit in Materialien und Oberflächenausrüstungen von Objekten oft noch Ruß oder Graphit als elektrisch leitfähige Pigmente eingesetzt werden, sind bereits seit längerer Zeit elektrisch leitfähige Pigmente auf der Basis transparenter plättchenförmiger Substrate bekannt. Letztere bestehen häufig aus Glimmer und weisen auf ihrer Oberfläche eine Beschichtung aus einem elektrisch leitfähigen Material, häufig mit Antimon dotiertes Zinnoxid, auf. Im Gegensatz zu Ruß und Graphit, die den damit ausgerüsteten Materialien eine dunkle bis schwarze Farbe verleihen und nur bedingt zur Abmischung mit anderen Farbmitteln geeignet sind, können die auf Glimmer basierenden elektrisch leitfähigen Pigmente auch in hellen Beschichtungen und mit diversen Farbmitteln kombiniert eingesetzt werden. Je nach Teilchengröße und Schichtaufbau der Pigmente können sogar ganz oder teilweise transparente Anwendungsmedien mit heller oder bunter Farbgebung erzielt werden.

Beispielsweise sind Pigmente auf Glimmerbasis, die entweder nur mit einer Schicht aus (Sb,Sn)O₂ oder aber mit einem Schichtsystem aus TiO₂/(Sb,Sn)O₂ beschichtet sind, unter den Bezeichnungen Minatec® 31 CM oder Minatec® 30 CM (Produkte der Merck KGaA) kommerziell erhältlich.
In anderen Ausführungsformen werden als Substrate Glimmerplättchen im Gemisch mit sphärischen Quarzpartikeln eingesetzt, wobei die beiden Substrate vorzugsweise in einem Verhältnis von 1:1 verwendet werden. Die leitfähige Beschichtung besteht hier ebenfalls aus mit Antimon dotiertem Zinnoxid. Diese Pigmente führen zu einem vergleichsweise hohen Ableitvermögen in damit versehenen Anwendungsmedien, sind jedoch für den Einsatz in besonders dünnen Beschichtungen nicht gut geeignet, weil die sphärischen Bestandteile zu einer Aufrauung der entsprechenden Oberfläche führen.
Die von der Merck KGaA vertriebenen elektrisch leitfähigen Pigmente auf Glimmerbasis sind beispielsweise in den Patenten DE 38 42 330, DE 42 37 990, EP 0 139 557, EP 0 359 569 oder EP 0 743 654 beschrieben.

Aus DE 10 2005 018615 sind plättchenförmige leitfähige Pigmente mit hoher Transparenz bekannt. Diese Pigmente weisen eine mittlere Teilchenfläche von 150 µm² oder mehr auf und sind insbesondere für die Anwendung in hochtransparenten Kunststoffartikeln, leitfähigen Dekoren und Klarlackschichten sehr gut geeignet. Für Anwendungen, die ein höheres Deckvermögen erfordern, beispielsweise für helle Lackierungen auf dunklen Untergründen, sind diese Pigmente jedoch weniger geeignet.

In WO 2012/072174 A1 werden dielektrische Beschichtungen und Gegenstände beschrieben, die halbleitende Pigmente und ein dielektrisches Bindemittel enthalten, wobei die Pigmentvolumenkonzentration des halbleitenden Pigmentes ≥ 10 % ist und die Beschichtungen und Gegenstände einen spezifischen Oberflächenwiderstand von größer oder gleich 10⁸ Ohm aufweisen.

Die vorab genannten elektrisch leitfähigen Pigmente weisen gemeinsam den Nachteil auf, dass sie in dünnen Schichten, die beispielsweise als Lackschichten oder Druckschichten vorliegen, entweder keine befriedigenden elektrisch leitenden Eigenschaften oder keine befriedigenden optischen Eigenschaften erzeugen oder in manchen Fällen keinerlei Wirksamkeit hinsichtlich der elektrischen Ableitfähigkeit aufweisen.

Die Schichtdicken von Grundierungen, beispielsweise Grundierungen auf Kunststoffteilen, liegen häufig lediglich bei 20 µm, bei Druckschichten sogar oft bei unter 10 µm. Dabei sind beim Einsatz der vorab genannten elektrisch leitfähigen Pigmente oft sehr hohe Pigmentkonzentrationen vonnöten, um eine elektrische Leitfähigkeit der Schicht überhaupt erzielen zu können, denn die Einsatzkonzentration, bei welcher die Beschichtung als solche elektrisch leitfähig wird, ist sowohl von der Schichtdicke der Beschichtung als auch von der Pigmentkonzentration der elektrisch leitfähigen Pigmente im Lack oder der Druckfarbe abhängig. So muss eine mindere Schichtdicke durch eine höhere Pigmentkonzentration ausgeglichen werden, was oft zu mechanischen Störungen bei der Verarbeitung der Beschichtungszusammensetzung wegen zu hoher Viskosität oder aber zu mangelnden physikalisch-mechanischen Eigenschaften der erhaltenen Beschichtungen führt. Auch ist es schwierig, bei sehr dünnen Schichtdicken, d.h. unterhalb von 15 µm, niedrige elektrische Widerstände von < 10E+05 Ohm zu erzeugen.

Werden jedoch für dünne Schichten grobteilige elektrisch leitfähige Pigmente oder auch feinteilige Mischungen aus plättchenförmigen und sphärischen Teilchen eingesetzt, erzeugen diese raue Oberflächen und ein mattes Erscheinungsbild bei den so erhaltenen Schichten.

Es besteht daher immer noch ein Bedarf an hellen, leitfähigen Pigmenten, die auch in dünnen Schichten zu einer ausreichend hohen elektrischen Leitfähigkeit bei geringer Einsatzkonzentration und zu einem glatten, optisch ansprechenden Erscheinungsbild führen.

Aufgabe der vorliegenden Erfindung ist es daher, ein elektrisch leitfähiges Pigment auf der Basis eines plättchenförmigen Substrates zur Verfügung zu stellen, welches in einem breiten Bereich Anwendung finden kann, im Anwendungsmedium bereits bei geringer Einsatzkonzentration zu einer guten Ableitfähigkeit führt, auch in dünnen Schichten sowohl das gewünschte elektrisch leitfähige Verhalten sowie eine glatte Oberfläche sicherstellt, ein hohes Deckvermögen aufweist und sich durch ein einfaches, kostengünstiges Verfahren herstellen lässt.

Eine weitere Aufgabe der vorliegenden Erfindung besteht darin, ein Verfahren zur Herstellung der genannten Pigmente zur Verfügung zu stellen.

Darüber hinaus besteht eine zusätzliche Aufgabe der vorliegenden Erfindung darin, die Verwendung der genannten Pigmente aufzuzeigen.

Es wurde nunmehr überraschenderweise gefunden, dass die Aufgabe der vorliegenden Erfindung gelöst werden kann, indem elektrisch leitfähige Pigmente, die auf dielektrischen, plättchenförmigen Trägermaterialien basieren und mit einer elektrisch leitfähigen Beschichtung versehen sind, eingesetzt werden, bei denen der Feinkornanteil der plättchenförmigen Substrate und damit auch der Feinkornanteil der elektrisch leitfähigen Pigmente gezielt sehr hoch eingestellt wird.

Die Aufgabe der vorliegenden Erfindung wird daher gelöst durch ein elektrisch leitfähiges Pigment, welches ein dielektrisches plättchenförmiges Substrat und eine das Substrat umhüllende, elektrisch leitfähige Schicht umfasst, wobei das Pigment eine volumengemittelte Teilchengröße d₉₅ < 25 µm aufweist und das Verhältnis der volumengemittelten Teilchengröße d₉₅ zu einer volumengemittelten Größe des Pigmentes d₅ größer als 5 ist.

Die Aufgabe der vorliegenden Erfindung wird ebenfalls durch ein Verfahren zur Herstellung des oben genannten elektrisch leitfähigen Pigmentes gelöst, indem ein Pulver aus dielektrischen plättchenförmigen Substraten, welches eine volumengemittelte Teilchengröße d₉₅ < 25 µm aufweist und bei dem mindestens 5 Volumenprozent des Pulvers eine Teilchengröße < 5 µm aufweisen, in einer wässrigen Suspension
- optional mit einer oder mehreren dielektrischen Schichten, sowie abschließend
- mit einer elektrisch leitfähigen Schicht beschichtet wird.

Darüber hinaus wird die Aufgabe der vorliegenden Erfindung auch durch die Verwendung des genannten elektrisch leitfähigen Pigmentes in Farben, Lacken, Druckfarben, Kunststoffen, Beschichtungszusammensetzungen, Sensoren, Sicherheitsanwendungen, zur Lasermarkierung, in Fußbodenbelägen, Folien, Formulierungen, keramischen Materialien, Gläsern oder Papieren gelöst, und zwar insbesondere zu deren antistatischer Ausrüstung oder Herstellung einer elektrischen Ableitfähigkeit.

Gegenstand der vorliegenden Erfindung sind demzufolge elektrisch leitfähige Pigmente, die ein dielektrisches, plättchenförmiges Substrat und eine das Substrat umhüllende, elektrisch leitfähige Schicht aufweisen. Sie weisen darüber hinaus auch eine volumengemittelte Teilchengröße d₉₅ von kleiner als 25 µm auf, wobei das Verhältnis des so bestimmten d₉₅₋Wertes zu einer Größe der Pigmente, die den volumengemittelten d₅-Wert darstellt, größer als 5 ist.

In einer vorteilhaften Ausführungsform der vorliegenden Erfindung beträgt die volumengemittelte Teilchengröße der elektrisch leitfähigen Pigmente d₉₅ weniger als 15 µm. Dabei liegt das Verhältnis d₉₅/d₅ ebenfalls bei größer als 5.

Als Teilchengröße des erfindungsgemäßen Pigmentes wird die über eine Teilchengrößenverteilungskurve bestimmte, volumengemittelte Teilchengröße betrachtet, die den d₉₅-Wert der Teilchengrößenverteilung einer Pulverschüttung des Pigmentes darstellt. Dabei bedeutet d₉₅, dass 95 Volumenprozent aller gemessenen Pigmentteilchen eine Größe unterhalb dieses Wertes aufweisen.

Entsprechend wird der d₅-Wert ermittelt, welcher aussagt, dass 5 Volumenprozent aller gemessenen Pigmentteilchen eine Teilchengröße unterhalb dieses Wertes aufweisen.

Erfindungsgemäß weisen mindestens 5 Volumenprozent der Pigmentpartikel einer Pulverschüttung des erfindungsgemäßen Pigmentes eine nominale Teilchengröße von < 5 µm auf.

Erfindungsgemäß liegt das Verhältnis der Messgrößen d₉₅/d₅ bei >5, vorzugsweise bei >7, und kann bis zu 15 betragen.

Ein Verhältnis der Messgrößen d₉₅/d₅ von größer 5 weist auf einen hohen Feinkornanteil in der Teilchengrößenverteilung und damit auf eine breite Teilchengrößenverteilung der erfindungsgemäßen Pigmente hin. Ein erhöhter Feinkornanteil war bisher gemäß den Lehren des Standes der Technik als Nachteil anzusehen, weil er zu einem hohen Streuverhalten der Pigmente im Anwendungsmedium führt und somit für transparente Beschichtungen nicht vorteilhaft ist.

Es hat sich jedoch gemäß der vorliegenden Erfindung überraschend herausgestellt, dass bei einer ohnehin geringen Teilchengröße von < 25 µm und in Anwendungsmedien, die keine hohe Transparenz erfordern, ein hoher Feinkornanteil an plättchenförmigen elektrisch leitfähigen Pigmenten vorteilhaft dazu führt, dass eine ausreichend hohe Ableitfähigkeit im Anwendungsmedium bereits bei geringen Schichtdicken und bei gleichzeitig geringer Pigmentmassekonzentration erzielbar ist.

Zur Bestimmung der Teilchengröße und Teilchengrößenverteilung kann in einfachster Weise eine direkte Ausmessung und Auszählung von Pigmentteilchen unter einem Mikroskop erfolgen. Vorzugsweise wird aber ein automatisiertes indirektes Verfahren zur Teilchengrößenbestimmung herangezogen, wie zum Beispiel eine Sedimentation mit Hilfe eines Sedigraphen (Stoke'sches Gesetz) oder insbesondere ein Verfahren zur Laserbeugung, mit Hilfe dessen nicht nur die nominale Größe einzelner Teilchen, sondern auch die prozentuale Teilchengrößenverteilung standardmäßig bestimmt werden kann. Hierfür stehen Messgeräte verschiedener Firmen zur Verfügung, beispielsweise ein Mastersizer 2000 der Firma Malvern oder, vorzugsweise, ein Accusizer 780 der Firma Agilent Technologies. Die in der vorliegenden Erfindung bestimmten Teilchengrößen d₉₅ sowie die d₅-Werte werden mit einem Accusizer 780 der Firma Agilent Technologies bestimmt.

Gemäß der vorliegenden Erfindung werden als dielektrisches, plättchenförmiges Substrat natürliche Glimmerplättchen, synthetische Glimmerplättchen, Talkplättchen, Kaolinplättchen, Sericitplättchen, Aluminiumoxidplättchen, Siliziumdioxidplättchen, Glasplättchen oder Gemische aus zwei oder mehreren von diesen eingesetzt. Bevorzugt sind dabei natürliche Glimmerplättchen, synthetische Glimmerplättchen, Talkplättchen, Kaolinplättchen, Sericitplättchen, Aluminiumoxidplättchen oder deren Gemische, insbesondere natürliche oder synthetische Glimmerplättchen, jeweils allein oder im Gemisch mit Talk-, Kaolin- und/oder Sericitplättchen. Dabei können die Gemische in jedem gewünschten Verhältnis im Bereich von 1:99 bis 99: 1, vorzugsweise von 10:90 bis 90:10, und insbesondere von 30:70 bis 70:30, vorliegen.

Plättchen aus den angegebenen Materialien leiten selbst den elektrischen Strom nicht und werden daher als dielektrisch bezeichnet.

Unter Plättchen im Sinne der vorliegenden Erfindung sind flächige Teilchen zu verstehen, die mit ihrer Ober- und Unterseite zwei annähernd parallel zueinander stehende Oberflächen aufweisen, deren Hauptachsen auf der Fläche (Ausdehnung in Länge und Breite) wesentlich größere Werte aufweisen als der Abstand zwischen den Oberflächen (Dicke). Die Plättchenform wird durch den Formfaktor, also das Verhältnis der Hauptachse zur Dicke, charakterisiert.
Die erfindungsgemäß eingesetzten Substrate weisen Formfaktoren von größer als 5, vorzugsweise von größer als 10 und insbesondere von größer als 20 auf. Bei der angestrebten breiten Teilchengrößenverteilung der erfindungsgemäßen elektrisch leitfähigen Pigmente versteht es sich von selbst, dass nicht nur die Teilchengrößenverteilung, sondern auch der Formfaktor der Pigmentsubstrate innerhalb der genannten Werte in einem breiten Bereich variiert. So weisen die Pigmente, die mit Teilchengrößen < 5 µm den Feinkornanteil der Pigmentschüttung bilden, tendenziell einen geringeren Formfaktor auf als die Pigmente, die eine Teilchengröße von 10, 15 oder 20 µm aufweisen.

Durch die Festlegung der Teilchengröße der erfindungsgemäßen elektrisch leitfähigen Pigmente wird auch die volumengemittelte Teilchengröße d₉₅ für die dielektrischen Pigmentsubstrate auf < 25 µm, vorzugsweise < 15 µm, festgelegt. Gleiches gilt für die Formfaktoren der elektrisch leitfähigen Pigmente, die sich im selben Bereich befinden wie die oben für die Substrate angegebenen Formfaktoren.

Generell bestimmt die Auswahl der Substratgeometrie die Teilchengröße, Teilchengrößenverteilung und den Formfaktor der resultierenden elektrisch leitfähigen Pigmente. Aus diesem Grunde ist ein besonderes Augenmerk auf die Auswahl der Substrate zu legen. Es werden insbesondere durch Feinmahlung und Klassierung hergestellte dielektrische Substrate verwendet. Solche Substrate sind im Allgemeinen kostengünstig kommerziell erhältlich und werden häufig als Füllstoffe oder als Substrate für Effektpigmente verwendet. Im Gegensatz zu hochwertigen Füllstoffen oder Substraten für Effektpigmente, bei denen üblicherweise Wert auf eine geringe Teilchengrößenverteilung gelegt wird, werden erfindungsgemäß die Feinkornanteile bei den durch Mahlung und Klassierung erhaltenen Substratplättchen nicht abgetrennt, sondern im Substratpulver belassen oder sogar zusätzlich hinzugefügt, sofern sich der Feinkornanteil des gemahlenen Substratpulvers als zu gering herausstellen sollte. Da dem Fachmann jedoch der Einfluss von Mahl- und Klassierprozessen auf die Teilchengeometrien plättchenförmiger Pigmente allgemein bekannt ist, reicht es in den meisten Fällen aus, den Mahl- und Klassierprozess fachgemäß so zu steuern, dass der Feinkornanteil im Mahlgut hoch genug ist, um der Maßgabe der vorliegenden Erfindung zu entsprechen.

Das erfindungsgemäße elektrisch leitfähige Pigment weist auf dem plättchenförmigen dielektrischen Substrat eine elektrisch leitfähige Schicht auf. Diese elektrisch leitfähige Schicht stellt die äußerste Schicht des Pigmentes dar.

Prinzipiell sind als elektrisch leitfähige Materialien für die elektrisch leitfähige Schicht alle Materialien mit ausreichend hohen elektrisch leitfähigen Eigenschaften geeignet, die sich in einem einfachen Verfahren mit nahezu homogener Schichtzusammensetzung und gleichmäßiger Schichtdicke auf den genannten Substraten abscheiden lassen. Vorzugsweise werden dotierte Metalloxide eingesetzt, wobei die elektrisch leitfähige Schicht ein oder mehrere von diesen umfassen kann beziehungsweise daraus besteht.

Bei den Metalloxiden handelt es sich vorzugsweise um Zinnoxid, Zinkoxid, Indiumoxid und/oder Titanoxid, vorzugsweise um Zinnoxid, Indiumoxid und/oder Zinkoxid. Die genannten Metalloxide liegen in der leitfähigen Schicht dotiert vor, wobei die Dotierung mit Gallium, Aluminium, Indium, Thallium, Germanium, Zinn, Phosphor, Arsen, Antimon, Selen, Tellur, Molybdän, Wolfram und/oder Fluor erfolgen kann. Dabei können in der leitfähigen Schicht einzelne der genannten Dotierstoffe, aber auch Kombinationen hieraus vorliegen. Vorzugsweise werden Aluminium, Indium, Wolfram, Tellur, Fluor, Phosphor und/oder Antimon zur Dotierung der Metalloxide eingesetzt. Der Anteil der Dotierstoffe in der leitfähigen Schicht kann 0,1 bis 30 Gew.-% betragen, vorzugsweise liegt er im Bereich von 2 bis 15 Gew.-%. In einer besonders bevorzugten Ausführungsform werden als leitfähige Schicht dotierte Zinnoxide eingesetzt. Diese sind vorzugsweise mit Indium, Wolfram, Tellur, Fluor, Phosphor und/oder Antimon dotiert. Besonders bevorzugt werden mit Antimon dotiertes Zinnoxid, mit Antimon und Tellur dotiertes Zinnoxid oder mit Wolfram dotiertes Zinnoxid eingesetzt. Vorteilhaft können jedoch auch mit Zinn dotiertes Indiumoxid, mit Aluminium dotiertes Zinkoxid oder mit Fluor dotiertes Zinnoxid eingesetzt werden. Am meisten bevorzugt erfolgt der Einsatz von mit Antimon dotiertem Zinnoxid. Das Verhältnis Zinn zu Antimon in dieser bevorzugten Kombination kann 4:1 bis 100:1 betragen, vorzugsweise liegt das Verhältnis bei 8:1 bis 50:1. Geringere Antimongehalte beeinflussen die Leitfähigkeit in negativer Weise, wohingegen höhere Antimongehalte keine weiteren Zugewinne in den elektrisch leitenden oder optischen Eigenschaften der Pigmente mehr bringen.

Der Anteil der elektrisch leitfähigen Schicht, bezogen auf das plättchenförmige Substrat, kann 30 bis 120 Gew.-% betragen und liegt vorzugsweise bei 50 bis 80 Gew.-%. Wird mit Antimon dotiertes Zinnoxid als Material für die leitfähige Schicht eingesetzt, so liegt der Antimongehalt vorzugsweise bei 1 bis 20 Mol-%, und besonders bevorzugt bei 5 bis 15 Mol-%, bezogen auf die Gesamtmenge an Antimon- und Zinnoxid.

Die elektrisch leitfähige Schicht weist eine Schichtdicke von 10 nm bis 200 nm, vorzugsweise von 20 nm bis 50 nm auf. In der Regel ist die elektrisch leitfähige Schicht so dünn, dass die geometrische Form und das Aspektverhältnis der Substrate im elektrisch leitfähigen Pigment weitestgehend erhalten bleibt.

Erfindungsgemäß kann sich zwischen dem Substrat und der elektrisch leitfähigen Schicht noch mindestens eine dielektrische Schicht befinden, welche ein- oder mehrlagig ist und aus einer dielektrischen Schicht mit einer Brechzahl n ≥ 1,8 und/oder einer dielektrischen Schicht mit einer Brechzahl n < 1,8 besteht. Solche dielektrischen Schichten, die in der Regel Metalloxidschichten darstellen, können zum Zwecke der chemischen Separierung von Substrat und leitfähiger Schicht aufgebracht werden und als Barriereschicht wirken, können jedoch bei Bedarf auch durch Interferenz und/oder Eigenfarbe zur Farbgebung des Pigmentes beitragen.

Die Anzahl und Schichtdicke dieser Schicht oder dieser Schichten muss dabei so gewählt werden, dass die Gesamtdicke der erfindungsgemäßen elektrisch leitfähigen Pigmente dadurch nicht soweit ansteigt, dass sie in dünnen Beschichtungen, die selbst Schichtdicken von nur etwa 5 bis 20 µm aufweisen, nicht mehr einsetzbar sind. Daher wird die Anzahl der dielektrischen Zwischenschichten in der Regel drei nicht übersteigen und vorzugsweise bei Null oder eins liegen. Ihre Gesamtdicke sollte 200 nm, vorzugsweise 100 nm, insbesondere 50 nm, nicht übersteigen.

Bei der/den dielektrischen Schicht(en) aus einem Material mit einer Brechzahl n ≥ 1,8 (hochbrechende Schichten) handelt es sich dabei um Schichten, die vorzugsweise aus TiO₂, Titanoxidhydrat, Titansuboxiden, SnO₂, ZrO₂, Cr₂O₃ und/oder Mischphasen davon bestehen. Diese Materialien sind entweder farblos oder besitzen eine Eigenfarbe auf Grund von Eigenabsorption. Besonders bevorzugt sind TiO₂, Titanoxidhydrat und SnO₂. Insbesondere bevorzugt sind TiO₂ und Titandioxidhydrat. Da diese durch Vorabbelegung mit Zinnoxid über eine besonders hohe Brechzahl verfügen, sind auch Mischphasen aus Zinnoxid mit TiO₂ und Titandioxidhydrat besonders bevorzugt, die sich in diesen Fällen aus den geringen Mengen an Zinnoxid und der nachfolgenden Schicht aus TiO₂ und/oder Titanoxidhydrat bilden.

Die dielektrischen Schicht(en) aus einem Material mit einer Brechzahl n < 1,8 (niedrigbrechende Schichten) bestehen vorzugsweise aus SiO₂, Siliziumoxidhydrat, Al₂O₃, Aluminiumoxidhydrat, aus Mischphasen davon oder aus MgF₂. Besonders bevorzugt sind SiO₂ und/oder Siliziumoxidhydrat.

Falls hoch- und niedrigbrechende dielektrische Materialien als Zwischenschichten zwischen Substrat und elektrisch leitfähiger Schicht aufgebracht werden sollen, richtet sich die Reihenfolge der aufzubringenden Schichten auf dem Substrat nach den jeweiligen optischen Erfordernissen. Die nötigen Kenntnisse hierzu stehen dem entsprechenden Fachmann ohne Weiteres zur Verfügung und müssen daher hier nicht genauer erläutert werden.

Die erfindungsgemäßen elektrisch leitfähigen Pigmente weisen eine hellgraue Pulverfarbe auf und eignen sich insbesondere für helle und deckende Beschichtungen, insbesondere Grundierungen, die mit geringer Schichtdicke auf Substrate aufgebracht werden und über ein stabiles, gutes Ableitverhalten verfügen sollen.

Gegenstand der vorliegenden Erfindung ist auch ein Verfahren zur Herstellung der genannten elektrisch leitfähigen Pigmente, bei dem ein Pulver aus dielektrischen plättchenförmigen Substraten, welches eine volumengemittelte Teilchengröße d₉₅ < 25 µm aufweist und bei dem mindestens 5 Volumenprozent des Pulvers eine Teilchengröße < 5 µm aufweisen, in einer wässrigen Dispersion optional mit einer oder mehreren dielektrischen Schichten, sowie abschließend mit einer elektrisch leitfähigen Schicht beschichtet wird.

Als dielelektrische Substrate werden dabei die oben bereits genannten Substrate, die ausgewählt sind aus natürlichen Glimmerplättchen, synthetischen Glimmerplättchen, Talkplättchen, Kaolinplättchen, Sericitplättchen, Aluminiumoxidplättchen, Siliziumdioxidplättchen, Glasplättchen oder Gemischen aus zwei oder mehreren von diesen, eingesetzt. Besonders bevorzugt werden natürliche oder synthetische Glimmerplättchen, jeweils allein oder im Gemisch mit Talk-, Kaolin- und/oder Sericitplättchen, eingesetzt.

Die Auswahl der Abmessungen der Substratplättchen sind oben bereits beschrieben worden. Die Substrate werden erfindungsgemäß durch Mahlen und Klassifizieren vorbereitet. Als Mahlverfahren eignen sich hierfür insbesondere solche der Trockenmahlung oder auch die Mahlung in wässriger Suspension, beispielsweise mit einem Kollergang, einer Stiftmühle oder einer Kugelmühle.

Vorzugsweise erfolgt eine Kontrolle des Feinanteils bereits bei den Substraten. Diese kann, wie vorab bereits beschrieben, über ein direktes Mess- und Auszählverfahren unter einem Mikroskop erfolgen, wird aber insbesondere entweder über ein Sedimentationsverfahren oder mit Hilfe eines Laserbeugungsverfahrens durchgeführt. Erfindungsgemäß besonders bevorzugt ist ein Messverfahren für Teilchengröße und Teilchengrößenverteilung mit Hilfe eines Accusizer 780 der Firma Agilent Technologies im Standardbetrieb.

Ist der gewünschte Anteil an feinkörnigen Substraten zu gering, kann wahlweise ein zusätzliche Mahlvorgang oder das Zumischen von bereits feinteilig vorliegendem Pulver geeigneter Zusammensetzung gewählt werden.

Die Belegung mit dielektrischen Schichten, die optional erfolgen kann, kann gemäß den allgemein üblichen Verfahren bei der Herstellung von Effektpigmenten erfolgen. Hierzu eignen sich insbesondere nasschemische Verfahren auf der Basis von anorganischen Ausgangsstoffen, wie sie zum Beispiel in den Druckschriften DE 14 67 468, DE 19 59 998, DE 20 09 566, DE 22 14 545, DE 22 15 191, DE 22 44 298, DE 23 13 331, DE 25 22 572, DE 31 37 808, DE 31 37 809, DE 31 51 355, DE 32 11 602 und DE 32 35 017 beschrieben sind. Solche Verfahren gehören zum Standardwissen des Pigmentfachmanns.

Für die Beschichtung mit einer elektrisch leitfähigen Schicht wird vorteilhafterweise ebenfalls ein nasschemisches Verfahren mit anorganischen Ausgangsstoffen ausgewählt. Solche Verfahren sind an sich bekannt und beispielsweise in der EP 139 557 beschrieben.

Besonders bevorzugt ist das Aufbringen einer elektrisch leitfähigen Schicht aus mit Antimon dotiertem Zinnoxid. Die gewünschte homogene Verteilung von Zinn und Antimon in der leitfähigen Schicht lässt sich dadurch erreichen, dass Salze von Zinn und Antimon, beispielsweise Chloride, entweder gemeinsam in einer Lösung oder in zwei getrennten Lösungen kontinuierlich und im vorbestimmten Mischungsverhältnis der wässrigen Suspension des Substrates bei einem geeigneten pH-Wert im Bereich von 1 bis 5 und einer geeigneten Temperatur von 50 bis 90°C so zudosiert werden, dass jeweils unmittelbar eine Hydrolyse und Abscheidung auf dem plättchenförmigen Substrat erfolgt.

Nach der Beendigung der Beschichtung bei Erreichen der gewünschten Schichtdicke werden die Pigmente aus der Suspension abgetrennt, ggf. gewaschen und getrocknet und in der Regel bei Temperaturen im Bereich von 400°C bis 1100°C, bevorzugt von 700°C bis 950°C geglüht.
Zur Verbesserung der Leitfähigkeit können die Pigmente optional auch unter einer Inertgasatmospäre oder unter einer reduzierenden Atmosphäre, z.B. unter Formiergas, geglüht werden. Dieses Verfahren ist z. B. im Falle von mit Wolfram dotiertem Zinnoxid vorteilhaft.

Für den Fall, dass nach der Beschichtung mit einer elektrisch leitfähigen Schicht die resultierenden elektrisch leitfähigen Pigmente durch Aggregation oder dergleichen nicht mehr über die benötigte breite Teilchengrößenverteilung verfügen, kann ein nachgeschalteter weiterer Mahlprozess stattfinden oder geeignete, bereits mit einer elektrisch leitfähigen Schicht beschichtete, feinkörnige Substrate zugesetzt werden. Gegenstand der vorliegenden Erfindung ist auch die Verwendung der vorab beschriebenen erfindungsgemäßen Pigmente in Farben, Lacken, Druckfarben, Kunststoffen, Beschichtungszusammensetzungen, Sensoren, Sicherheitsanwendungen, zur Lasermarkierung, in Fußbodenbelägen, Folien, Formulierungen, keramischen Materialien, Gläsern oder Papieren.

In diesen Anwendungsbereichen werden die erfindungsgemäßen Pigmente vorzugsweise zur Erzielung eines ausreichenden Ableitvermögens beziehungsweise einer Antistatikausrüstung eingesetzt. Von besonderem Vorteil ist dabei, dass die Konzentration der erfindungsgemäßen Pigmente, die im Anwendungsmedium, also insbesondere in Farben, Lacken, Druckfarben, Kunststoffen, Beschichtungszusammensetzungen, Fußbodenbelägen, Folien und keramischen Materialien im Bereich von 25 bis 60%, bezogen auf den Feststoffanteil des Anwendungsmediums (Pigmentmassekonzentration), liegt, bei dünnen Beschichtungen im Bereich unter 20 µm Schichtdicke bereits ab einer 35 %igen Einsatzkonzentration zu verlässlichen antistatischen Eigenschaften führt. So können in dünnen Lackschichten von 15 bis 20 µm Schichtdicke auf Kunststoffteilen bei einer Pigmentmassekonzentration im Bereich von 35 bis 45% Oberflächenwiderstände von 10E +04 Ohm und weniger erreicht werden, während in gedruckten Schichten von 5 µm Dicke auf gestrichenem Papier bei gleicher Konzentration Oberflächenwiderstände von 10E +06 Ohm erreicht werden.

Der Feinkornanteil der elektrisch leitfähigen Pigmente trägt durch elektrische Verbrückung gröberer elektrisch leitfähiger Teilchen zur Ausbildung stabiler Leitpfade bei. Dadurch wird die Perkolationsschwelle im Anwendungsmedium zu niedrigeren Einsatzkonzentrationen verschoben, so dass Beschichtungen oder Formkörper mit niedrigerer Pigmentmassekonzentration formuliert werden können. Neben verbesserten Verarbeitungseigenschaften von insbesondere Beschichtungszusammensetzungen und Farben, Lacken oder Druckfarben können sich die plättchenförmigen Pigmente im Anwendungsmedium gut in der Schichtebene ausrichten, wodurch sie die Schichtoberfläche nicht überragen, selbst wenn ihre Teilchengröße oberhalb der Schichtdicke liegt. Außerdem führt das Vorhandensein von feinteiligen plättchenförmigen Partikeln nicht zur Desorientierung gröberer Partikel, wie es im Gegensatz dazu bei der Zumischung sphärischer Partikel in elektrisch leitfähigen Pigmentmischungen beobachtet werden kann. Daher verfügen die mit dem erfindungsgemäßen Pigment erzielbaren Schichten über eine glatte Oberfläche, die kaum oder keine Mattierungen aufweist. Sie eignen sich insbesondere für die Anwendung in leitfähigen Grundierungen für hochwertige ESTA-Lackierungen sowie für leitfähige Drucke. Außerdem sind sie auch vorteilhaft als Additive für lasermarkierbare und laserschweißbare Kunststoffe geeignet.

Beim Einsatz der erfindungsgemäßen Pigmente in Lacken und Farben sind alle dem Fachmann bekannten Anwendungsbereiche möglich, wie z.B. Pulverlacke, Automobillacke, Druckfarben für den Tief-, Offset-, Sieb-, oder Flexodruck sowie Lacke in Außenanwendungen. Für die Herstellung von Druckfarben ist eine Vielzahl von Bindern, insbesondere wasserlösliche, aber auch lösemittelhaltige Typen, z.B. auf der Basis von Acrylaten, Methacrylaten, Polyestern, Polyurethanen, Nitrocellulose, Ethylcellulose, Polyamid, Polyvinylbutyrat, Phenolharzen, Melaminharzen, Maleinharzen, Stärke oder Polyvinylalkohol geeignet. Bei den Lacken kann es sich um Wasser- oder lösemittelbasierte Lacke handeln, wobei die Auswahl der Lackbestandteile dem Allgemeinwissen des Fachmannes unterliegt.

Die erfindungsgemäßen Pigmente können ebenso vorteilhaft zur Herstellung von leitfähigen Kunststoffen und Folien eingesetzt werden, beispielsweise für leitfähige Folien und Scheiben, Kunststoffbehältnisse und Formkörper für alle dem Fachmann bekannten Anwendungen, die eine elektrische Leitfähigkeit erfordern. Als Kunststoffe eignen sich dabei alle gängigen Kunststoffe, beispielsweise Duromere und thermoplastische Kunststoffe. Die erfindungsgemäßen Pigmente unterliegen dabei denselben Bedingungen wie übliche Perlglanz- bzw. Interferenzpigmente. Besonderheiten der Einbringung in Kunststoffe sind beispielsweise in R. Glausch, M. Kieser, R. Maisch, G. Pfaff, J. Weitzel, Perlglanzpigmente, Curt Vincentz Verlag, 1996, 83 ff., beschrieben.

Die erfindungsgemäßen Pigmente sind auch zur Herstellung von fließfähigen Pigmentpräparationen und Trockenpräparaten geeignet, die ein oder mehrere erfindungsgemäße Pigmente, gegebenenfalls weitere Pigmente bzw. Farbmittel, Bindemittel und optional ein oder mehrere Additive enthalten. Unter Trockenpräparaten sind auch Präparate zu verstehen, die 0 bis 8 Gew.-%, vorzugsweise 2 bis 8 Gew.-%, insbesondere 3 bis 6 Gew.-%, an Wasser und/oder eines Lösemittels oder Lösemittelgemisches enthalten. Die Trockenpräparate liegen vorzugsweise als Pearlets, Pellets, Granulate, Chips, Würstchen oder Briketts vor und weisen Teilchengrößen von etwa 0,2 bis 80 mm auf.

Es versteht sich von selbst, dass die erfindungsgemäßen Pigmente in den verschiedensten Anwendungsmedien je nach Bedarf mit weiteren organischen und/oder anorganischen Farbmitteln und/oder elektrisch leitfähigen Materialien im Gemisch eingesetzt werden können. Die Mischungsverhältnisse sind hierbei in keiner Weise limitiert, so lange die Pigmentkonzentration im Medium hoch genug ist, um die gewünschten elektrisch leitfähigen Eigenschaften zu erzielen, aber niedrig genug, um die erforderliche Viskosität bzw. die gewünschten Eigenschaften nicht negativ zu beeinflussen.

Die vorliegende Erfindung soll nachfolgend anhand von Beispielen erläutert werden, die die Erfindung beschreiben, aber nicht beschränken sollen.

### Beispiele:

Vorbereitung des Glimmers:
Rohglimmer wird in einem Koller fein gemahlen und mit Hilfe eines Dekanters in verschiedene Fraktionen klassiert, die sich in Korngröße und
Kornspektrum unterscheiden. Von einer feinteiligen Glimmerfraktion < 15 µm werden die Feinstanteile im Dekanter abgetrennt.

### Beispiel 1:

### Leitfähiges Pigment auf Basis von feinteiligem Talkum und Glimmer

50 g Plustalk H05 AW der Fa. Mondo Minerals und 50 g der oben beschriebenen feinteiligen Glimmerfraktion werden in 1900 ml VE-Wasser suspendiert und die Suspension mit Salzsäure auf pH 2,1 eingestellt. Bei 75°C wird unter Rühren eine Mischung aus 206 g einer 50 Gew.%igen wässrigen SnCl₄-Lösung, 67 ml HCl (37 Gew.%) sowie 47 g einer 35 Gew.%igen wässrigen SbCl₃-Lösung langsam kontinuierlich zu der Suspension dosiert. Durch gleichzeitige geregelte Zugabe von Natronlauge wird der pH-Wert konstant gehalten. Nach Zugabe der Gesamtmenge der Lösung wird noch 30 min. bei 75°C nachgerührt, anschließend unter Rühren auf Raumtemperatur abgekühlt und die Reaktionsmischung auf pH 3 eingestellt. Das erhaltene Pigment wird über eine Nutsche abfiltriert, mit Wasser gewaschen, bei 140°C getrocknet und 30 min. bei 750°C geglüht. Man erhält 167 g eines hellgrauen Pigmentpulvers. Das Verhältnis Sn:Sb in der Beschichtung beträgt ca. 85:15. Die Teilchengrößenverteilung des Pigmentes wird mittels Laserbeugung auf einem Accusizer, Modell 870, der Firma Agilent Technologies vermessen. Das Produkt weist eine volumengewichtete Teilchengröße d₉₅ von 11,2 µm und ein d₅ von 1,26 µm auf. Das Verhältnis d₉₅/d₅ beträgt 8,9.

### Beispiel 2:

### Leitfähiges Pigment auf der Basis von feinteiligem Talkum

100 g Plustalk H 05 AW der Fa. Mondo Minerals werden in 1900 ml VE-Wasser suspendiert und die Suspension mit Salzsäure auf pH 2,1 eingestellt. Bei 75°C wird unter Rühren eine Mischung aus 206 g einer 50 Gew.%igen wässrigen SnCl₄-Lösung, 67 ml HCl (37 Gew.%) sowie 47 g einer 35 Gew.%igen wässrigen SbCl₃-Lösung langsam kontinuierlich zu der Suspension dosiert. Durch gleichzeitige geregelte Zugabe von Natronlauge wird der pH-Wert konstant gehalten. Nach Zugabe der Gesamtmenge der Lösung wird noch 30 min. bei 75°C nachgerührt, anschließend unter Rühren auf Raumtemperatur abgekühlt und die Reaktionsmischung auf pH 3 eingestellt. Das erhaltene Pigment wird über eine Nutsche abfiltriert, mit Wasser gewaschen, bei 140°C getrocknet und 30 min. bei 750°C geglüht. Man erhält 165 g eines hellgrauen Pigmentpulvers. Das Verhältnis Sn:Sb in der Beschichtung beträgt ca. 85:15. Die Teilchengrößenverteilung des Pigmentes wird mittels Laserbeugung auf einem Accusizer, Modell 870, der Firma Agilent Technologies vermessen. Das Produkt weist einen sehr hohen Feinanteil auf bei einer volumengewichteten Teilchengröße d₉₅ von 11 µm und einem d₅ von 1 µm. Das Verhältnis d₉₅/d₅ beträgt 11.

### Beispiel 3:

### Leitfähiges Pigment auf der Basis von Glimmer

100 g einer Glimmerfraktion mit einer Teilchengröße < 25 µm werden in 1900 ml VE-Wasser suspendiert und die Suspension mit Salzsäure auf pH 2,1 eingestellt. Bei 75°C wird unter Rühren eine Mischung aus 206 g einer 50 Gew.%igen wässrigen SnCl₄-Lösung, 67 ml HCl (37 Gew.%) sowie 47 g einer 35 Gew.%igen wässrigen SbCl₃-Lösung langsam kontinuierlich zu der Suspension dosiert. Durch gleichzeitige geregelte Zugabe von Natronlauge wird der pH-Wert konstant gehalten. Nach Zugabe der Gesamtmenge der Lösung wird noch 30 min. bei 75°C nachgerührt, anschließend unter Rühren auf Raumtemperatur abgekühlt und die Reaktionsmischung auf pH 3 eingestellt. Das erhaltene Pigment wird über eine Nutsche abfiltriert, mit Wasser gewaschen, bei 140°C getrocknet und 30 min. bei 750°C geglüht. Man erhält 166 g eines hellgrauen Pigmentpulvers. Das Verhältnis Sn:Sb in der Beschichtung beträgt ca. 85:15. Die Teilchengrößenverteilung des Pigmentes wird mittels Laserbeugung auf einem Accusizer, Modell 870, der Firma Agilent Technologies vermessen. Das Produkt weist eine volumengewichtete Teilchengröße d₉₅ von 23,5 µm und ein d₅ von 3,8 µm auf. Das Verhältnis d₉₅/d₅ beträgt 6,2.

### Beispiel 4:

### Leitfähiges Pigment auf Basis von Talkum und Glimmer

50 g Plustalk H 05 AW der Fa. Mondo Minerals und 50 g einer Glimmerfraktion mit einer Teilchengröße < 25 µm werden in 1900 ml VE-Wasser suspendiert und die Suspension mit Salzsäure auf pH 2,1 eingestellt. Bei 75°C wird unter Rühren eine Mischung aus 206 g einer 50 Gew.%igen wässrigen SnCl₄-Lösung, 67 ml HCl (37 Gew.%) sowie 47 g einer 35 Gew.%igen wässrigen SbCl₃-Lösung langsam kontinuierlich zu der Suspension dosiert. Durch gleichzeitige geregelte Zugabe von Natronlauge wird der pH-Wert konstant gehalten. Nach Zugabe der Gesamtmenge der Lösung wird noch 30 min. bei 75°C nachgerührt, anschließend unter Rühren auf Raumtemperatur abgekühlt und die Reaktionsmischung auf pH 3 eingestellt. Das erhaltene Pigment wird über eine Nutsche abfiltriert, mit Wasser gewaschen, bei 140°C getrocknet und 30 min. bei 750°C geglüht. Man erhält 167 g eines hellgrauen Pigmentpulvers. Das Verhältnis Sn:Sb in der Beschichtung beträgt ca. 85:15, die Schichtdicke der mit Antimon dotierten Zinnoxidschicht liegt bei ca. 25 µm. Die Teilchengrößenverteilung des Pigmentes wird mittels Laserbeugung auf einem Accusizer, Modell 870, der Firma Agilent Technologies vermessen. Das Produkt weist eine volumengewichtete Teilchengröße d₉₅ von 9,3 µm und ein d₅ von 1,4 µm auf. Das Verhältnis d₉₅/d₅ beträgt 6,6.

### Vergleichsbeispiel 1:

### Pigment auf Glimmerbasis

100 g einer feinteiligen Glimmerfraktion mit einer Teilchengröße von < 15 µm, die wie vorab beschrieben von den Feinstanteilen befreit ist, wird in 1900 ml VE-Wasser suspendiert und die Suspension mit Salzsäure auf pH 2,1 eingestellt. Bei 75°C wird unter Rühren eine Mischung aus 206 g einer 50 Gew.%igen wässrigen SnCl₄-Lösung, 67 ml HCl (37 Gew.%) sowie 47 g einer 35 Gew.%igen wässrigen SbCl₃-Lösung langsam kontinuierlich zu der Suspension dosiert. Durch gleichzeitige geregelte Zugabe von Natronlauge wird der pH-Wert konstant gehalten. Nach Zugabe der Gesamtmenge der Lösung wird noch 30 min. bei 75°C nachgerührt, anschließend unter Rühren auf Raumtemperatur abgekühlt und die Reaktionsmischung auf pH 3 eingestellt. Das erhaltene Pigment wird über eine Nutsche abfiltriert, mit Wasser gewaschen, bei 140°C getrocknet und 30 min. bei 800°C geglüht. Man erhält 164 g eines hellgrauen Pigmentpulvers. Das Verhältnis Sn:Sb in der Beschichtung beträgt ca. 85:15. Die Teilchengrößenverteilung des Pigmentes wird mittels Laserbeugung auf einem Accusizer, Modell 870, der Firma Agilent Technologies vermessen. Das Produkt weist eine volumengewichtete Teilchengröße d₉₅ von 7,2 µm und ein d₅ von 1,6 µm auf. Das Verhältnis d₉₅/d₅ beträgt 4,5.

### Vergleichsbeispiel 2:

### Pigment auf der Basis von Glimmer und sphärischem Quarzpulver

50 g feinteiliges Quarzmehl (d₅₀ ca. 3 µm) und 50 g der oben beschriebenen feinteiligen Glimmerfraktion < 15 µm werden in 1900 ml VE-Wasser suspendiert und die Suspension mit Salzsäure auf pH 2,1 eingestellt. Bei 75°C wird unter Rühren eine Mischung aus 206 g einer 50 Gew.%igen wässrigen SnCl₄-Lösung, 67 ml HCl (37 Gew.%) sowie 47 g einer 35 Gew.%igen wässrigen SbCl₃-Lösung langsam kontinuierlich zu der Suspension dosiert. Durch gleichzeitige geregelte Zugabe von Natronlauge wird der pH-Wert konstant gehalten. Nach Zugabe der Gesamtmenge der Lösung wird noch 30 min. bei 75°C nachgerührt, anschließend unter Rühren auf Raumtemperatur abgekühlt und die Reaktionsmischung auf pH 3 eingestellt. Das erhaltene Pigment wird über eine Nutsche abfiltriert, mit Wasser gewaschen, bei 140°C getrocknet und 30 min. bei 750°C geglüht. Man erhält 167 g eines hellgrauen Pigmentpulvers. Das Verhältnis Sn:Sb in der Beschichtung beträgt ca. 85:15. Die Teilchengrößenverteilung des Pigmentes wird mittels Laserbeugung auf einem Accusizer, Modell 870, der Firma Agilent Technologies vermessen. Das Produkt weist eine volumengewichtete Teilchengröße d₉₅ von 9,3 µm und ein d₅ von 1,05 µm auf. Das Verhältnis d₉₅/d₅ beträgt 8,9.

### Vergleichsbeispiel 3:

### Pigment auf der Basis von Glimmer und sphärischem Quarzpulver

50 g feinteiliges Quarzmehl (d₅₀ ca. 3 µm) und 50 g einer Glimmerfraktion < 60 µm werden in 1900 ml VE-Wasser suspendiert und die Suspension mit Salzsäure auf pH 2,1 eingestellt. Bei 75°C wird unter Rühren eine Mischung aus 146 g einer 50 Gew.%igen wässrigen SnCl₄-Lösung, 67 ml HCl (37 Gew.%) sowie 15 g einer 35 Gew.%igen wässrigen SbCl₃-Lösung langsam kontinuierlich zu der Suspension dosiert. Durch gleichzeitige geregelte Zugabe von Natronlauge wird der pH-Wert konstant gehalten. Nach Zugabe der Gesamtmenge der Lösung wird noch 30 min. bei 75°C nachgerührt, anschließend unter Rühren auf Raumtemperatur abgekühlt und die Reaktionsmischung auf pH 3 eingestellt. Das erhaltene Pigment wird über eine Nutsche abfiltriert, mit Wasser gewaschen, bei 140°C getrocknet und 30 min. bei 750°C geglüht. Man erhält 166 g eines hellgrauen Pigmentpulvers. Das Verhältnis Sn:Sb in der Beschichtung beträgt ca. 92:8. Die Teilchengrößenverteilung des Pigmentes wird mittels Laserbeugung auf einem Accusizer, Modell 870, der Firma Agilent Technologies vermessen. Das Produkt weist eine volumengewichtete Teilchengröße d₉₅ von 49,7 µm und ein d₅ von 3,0 µm auf. Das Verhältnis d₉₅/d₅ beträgt 16,6.

### Vergleichsbeispiel 4:

### Pigment auf der Basis von Glimmer

100 g einer Glimmerfraktion < 40 µm werden in 1900 ml VE-Wasser suspendiert und die Suspension mit Salzsäure auf pH 2,1 eingestellt. Bei 75°C wird unter Rühren eine Mischung aus 146 g einer 50 Gew.%igen wässrigen SnCl₄-Lösung, 67 ml HCl (37 Gew.%) sowie 15 g einer 35 Gew.%igen wässrigen SbCl₃-Lösung langsam kontinuierlich zu der Suspension dosiert. Durch gleichzeitige geregelte Zugabe von Natronlauge wird der pH-Wert konstant gehalten. Nach Zugabe der Gesamtmenge der Lösung (290 ml) wird noch 30 min. bei 75°C nachgerührt, anschließend unter Rühren auf Raumtemperatur abgekühlt und die Reaktionsmischung auf pH 3 eingestellt. Das erhaltene Pigment wird über eine Nutsche abfiltriert, mit Wasser gewaschen, bei 140°C getrocknet und 30 min. bei 800°C geglüht. Man erhält 142 g eines hellgrauen Pigmentpulvers. Das Verhältnis Sn:Sb in der Beschichtung beträgt ca. 92:8. Die Teilchengrößenverteilung des Pigmentes wird mittels Laserbeugung auf einem Accusizer, Modell 870, der Firma Agilent Technologies vermessen. Das Produkt weist eine volumengewichtete Teilchengröße d₉₅ von 35,1 µm und ein d₅ von 6,4 µm auf. Das Verhältnis d₉₅/d₅ beträgt 5,5.

### Auswertung:

Prüfung der Leitfähigkeit im Lackfilm:
Die Pigmente der Beispiele und Vergleichsbeispiele werden in NC-Lack (12% Bindemittel aus Nitrozellulose und Butylacrylat in einem Lösemittelgemisch) dispergiert. Mit den Lackzubereitungen werden PET-Folien mit einem Lackfilm von 9 µm Trockenschichtdicke und einer Pigmentmassekonzentration von 35% im getrockneten Film beschichtet.

Nach der Trocknung der Lackschichten wird mit Hilfe einer Federzungenelektrode der Ableitwiderstand (spezifischer Oberflächenwiderstand) nach DIN 53482 gemessen. Die Messspannung beträgt ≤ 100V. Die Ergebnisse sind in Tabelle 1 dargestellt. Ein Vergleichslackfilm ohne leitfähiges Pigment weist einen spezifischen Oberflächenwiderstand von > 10¹⁰ Ohm auf.

Charakterisierung der Oberflächenbeschaffenheit:
Es werden Lackfilme mit möglichst glatter Oberfläche benötigt. Die Rauigkeit des jeweiligen Lackfilms wird optisch begutachtet. Ein Lackfilm ohne leitfähiges Pigment, der eine sehr glatte Oberfläche aufweist, wird mit 10 beurteilt.

Die Ergebnisse in Tabelle 1 zeigen, dass die elektrisch leitfähigen Pigmente gemäß der vorliegenden Erfindung in dünnen Filmen zu einer glatten Oberfläche und einer gleichmäßigen Beschichtung führen und bereits bei vergleichsweise niedriger Einsatzkonzentration eine gute Leitfähigkeit zeigen. Im Vergleich zeigen Pigmente gleichen Aufbaus und gleicher Zusammensetzung auf Glimmersubstraten mit enger Teilchengrößenverteilung unter den gegebenen Bedingungen zwar eine hohe Beschichtungsqualität, aber keine brauchbare elektrische Leitfähigkeit, während Pigmente mit einem Anteil an sphärischen Partikeln und einem ebenso hohen Feinanteil zu rauen und matten Oberflächen führen.

**Tabelle 1:**

| Pigment aus Beispiel | Substrat | Spez. Oberflächenwiderstand [kOhm] | D(95) [µm] | d(95)/d(5) Accusizer | Oberflächenbeschaffenheit |
|---|---|---|---|---|---|
| 1 (Erf.) | Glimmer + Talkum | 9.00E+02 | 11,2 | 8,9 | 9 |
| 2 (Erf.) | Talkum | 3.10E+03 | 11 | 11 | 9 |
| 3 (Erf.) | Glimmer | 2,40E+03 | 23,5 | 6,2 | 8 |
| 4 (Erf.) | Glimmer + Talkum | 2.00E+02 | 9,3 | 6,6 | 9 |
| Vergl.1 | Glimmer | 5.00E+10 | 7,2 | 4,5 | 8 |
| Vergl.2 | Glimmer + Quarz | 2,25E+04 | 9,3 | 8,9 | 4 |
| Vergl.3 | Glimmer + Quarz | 2,08E+06 | 49,7 | 16,6 | 2 |
| Vergl. 4 | Glimmer | 5.00E+10 | 35,1 | 5,5 | 6 |

## Patentansprüche

1. Elektrisch leitfähiges Pigment, umfassend ein dielektrisches plättchenförmiges Substrat und eine das Substrat umhüllende, elektrisch leitfähige Schicht, **dadurch gekennzeichnet, dass** es eine volumengemittelte Teilchengröße d₉₅ < 25 µm aufweist und das Verhältnis der volumengemittelten Teilchengröße d₉₅ zu einer volumengemittelten Größe der Pigmente d₅ größer als 5 ist.

2. Elektrisch leitfähiges Pigment gemäß Anspruch 1, **dadurch gekennzeichnet, dass** das Substrat ausgewählt ist aus natürlichen Glimmerplättchen, synthetischen Glimmerplättchen, Talkplättchen, Kaolinplättchen, Sericitplättchen, Aluminiumoxidplättchen, Siliziumdioxidplättchen, Glasplättchen oder Gemischen aus zwei oder mehreren von diesen.

3. Elektrisch leitfähiges Pigment gemäß Anspruch 1 oder 2, **dadurch gekennzeichnet, dass** die elektrisch leitfähige Schicht aus einem oder mehreren dotierten Metalloxiden besteht.

4. Elektrisch leitfähiges Pigment gemäß Anspruch 3, **dadurch gekennzeichnet, dass** es sich bei dem dotierten Metalloxid um Zinnoxid, Zinkoxid, Indiumoxid und/oder Titanoxid handelt, welche(s) mit Gallium, Aluminium, Indium, Thallium, Germanium, Zinn, Phosphor, Arsen, Antimon, Selen, Tellur, Molybdän, Wolfram und/oder Fluor dotiert ist.

5. Elektrisch leitfähiges Pigment gemäß Anspruch 3 oder 4, **dadurch gekennzeichnet, dass** die elektrisch leitfähige Schicht aus einem dotierten Zinnoxid besteht.

6. Elektrisch leitfähiges Pigment gemäß einem oder mehreren der Ansprüche 1 bis 5, **dadurch gekennzeichnet, dass** sich zwischen dem plättchenförmigen Substrat und der elektrisch leitfähigen Schicht mindestens eine dielektrische Schicht befindet.

7. Elektrisch leitfähiges Pigment gemäß einem oder mehreren der Ansprüche 1 bis 6, **dadurch gekennzeichnet, dass** das Verhältnis der volumengemittelten Teilchengröße d₉₅ zu der volumengemittelten Größe der Pigmente d₅ größer als 7 ist.

8. Elektrisch leitfähiges Pigment gemäß einem oder mehreren der Ansprüche 1 bis 7, **dadurch gekennzeichnet, dass** das Pigment eine volumengemittelte Teilchengröße d₉₅ von < 15 µm aufweist.

9. Verfahren zur Herstellung eines elektrisch leitfähigen Pigmentes gemäß einem oder mehreren der Ansprüche 1 bis 8, **dadurch gekennzeichnet, dass** ein Pulver aus dielektrischen plättchenförmigen Substraten, welches eine volumengemittelte Teilchengröße d₉₅ < 25 µm aufweist und bei dem mindestens 5 Volumenprozent des Pulvers eine Teilchengröße < 5 µm aufweisen, in einer wässrigen Suspension
- optional mit einer oder mehreren dielektrischen Schichten, sowie abschließend
- mit einer elektrisch leitfähigen Schicht beschichtet wird.

10. Verfahren gemäß Anspruch 9, **dadurch gekennzeichnet, dass** es sich bei den dielektrischen Substraten um natürliche Glimmerplättchen, synthetische Glimmerplättchen, Talkplättchen, Kaolinplättchen, Sericitplättchen, Aluminiumoxidplättchen, Siliziumdioxidplättchen, Glasplättchen oder Gemische aus zwei oder mehreren von diesen handelt.

11. Verfahren gemäß Anspruch 9 oder 10, **dadurch gekennzeichnet, dass** das Pulver aus dielektrischen plättchenförmigen Substraten mit einer elektrisch leitfähigen Schicht aus einem oder mehreren dotierten Metalloxiden beschichtet wird.

12. Verwendung eines elektrisch leitfähigen Pigmentes gemäß einem oder mehreren der Ansprüche 1 bis 8 in Farben, Lacken, Druckfarben, Kunststoffen, Beschichtungszusammensetzungen, Sensoren, Sicherheitsanwendungen, zur Lasermarkierung, in Fußbodenbelägen, Folien, Formulierungen, keramischen Materialien, Gläsern oder Papieren.

13. Verwendung gemäß Anspruch 12, **dadurch gekennzeichnet, dass** das elektrisch leitfähige Pigment in Farben, Lacken, Druckfarben, Kunststoffen, Beschichtungszusammensetzungen, Fußbodenbelägen, Folien oder keramischen Materialien mit einer Pigmentmassekonzentration im Bereich von 25 bis 60 % eingesetzt wird.

## Claims

1. Electrically conductive pigment, comprising a dielectric flake-form substrate and an electrically conductive layer surrounding the substrate, **characterised in that** it has a volume average particle size d₉₅ < 25 µm and the ratio of the volume average particle size d₉₅ to a volume average size of the pigments d₅ is greater than 5.

2. Electrically conductive pigment according to Claim 1, **characterised in that** the substrate is selected from natural mica flakes, synthetic mica flakes, talc flakes, kaolin flakes, sericite flakes, aluminium oxide flakes, silicon dioxide flakes, glass flakes or mixtures of two or more thereof.

3. Electrically conductive pigment according to Claim 1 or 2, **characterised in that** the electrically conductive layer consists of one or more doped metal oxides.

4. Electrically conductive pigment according to Claim 3, **characterised in that** the doped metal oxide is tin oxide, zinc oxide, indium oxide and/or titanium oxide, which is(are) doped with gallium, aluminium, indium, thallium, germanium, tin, phosphorus, arsenic, antimony, selenium, tellurium, molybdenum, tungsten and/or fluorine.

5. Electrically conductive pigment according to Claim 3 or 4, **characterised in that** the electrically conductive layer consists of a doped tin oxide.

6. Electrically conductive pigment according to one or more of Claims 1 to 5, **characterised in that** at least one dielectric layer is located between the flake-form substrate and the electrically conductive layer.

7. Electrically conductive pigment according to one or more of Claims 1 to 6, **characterised in that** the ratio of the volume average particle size d₉₅ to the volume average size of the pigments d₅ is greater than 7.

8. Electrically conductive pigment according to one or more of Claims 1 to 7, **characterised in that** the pigment has a volume average particle size d₉₅ of < 15 µm.

9. Process for the preparation of an electrically conductive pigment according to one or more of Claims 1 to 8, **characterised in that** a powder comprising dielectric flake-form substrates which has a volume average particle size d₉₅ < 25 µm and in which at least 5 per cent by volume of the powder have a particle size < 5 µm is coated in an aqueous suspension
- optionally with one or more dielectric layers, and finally
- with an electrically conductive layer.

10. Process according to Claim 9, **characterised in that** the dielectric substrates are natural mica flakes, synthetic mica flakes, talc flakes, kaolin flakes, sericite flakes, aluminium oxide flakes, silicon dioxide flakes, glass flakes or mixtures of two or more thereof.

11. Process according to Claim 9 or 10, **characterised in that** the powder comprising dielectric flake-form substrates is coated with an electrically conductive layer comprising one or more doped metal oxides.

12. Use of an electrically conductive pigment according to one or more of Claims 1 to 8 in paints, coatings, printing inks, plastics, coating compositions, sensors, security applications, for laser marking, in floorcoverings, films, formulations, ceramic materials, glasses or papers.

13. Use according to Claim 12, **characterised in that** the electrically conductive pigment is employed in paints, coatings, printing inks, plastics, coating compositions, floorcoverings, films or ceramic materials having a pigment mass concentration in the range from 25 to 60%.

## Revendications

1. Pigment électriquement conducteur, comprenant un substrat diélectrique sous forme de flocons et une couche électriquement conductrice qui entoure le substrat, **caractérisé en ce qu'**il présente une taille de particule moyenne en volume d₉₅ < 25 µm et **en ce que** le rapport de la taille de particule moyenne en volume d₉₅ sur une taille moyenne en volume des pigments d₅ est supérieur à 5.

2. Pigment électriquement conducteur selon la revendication 1, **caractérisé en ce que** le substrat est sélectionné parmi des flocons de mica naturel, des flocons de mica synthétique, des flocons de talc, des flocons de kaolin, des flocons de séricite, des flocons d'oxyde d'aluminium, des flocons de dioxyde de silicium, des flocons de verre ou des mélanges de deux de ces types de flocons ou plus.

3. Pigment électriquement conducteur selon la revendication 1 ou 2, **caractérisé en ce que** la couche électriquement conductrice est constituée par un ou plusieurs oxyde(s) métallique(s) dopé(s).

4. Pigment électriquement conducteur selon la revendication 3, **caractérisé en ce que** l'oxyde métallique dopé est de l'oxyde d'étain, de l'oxyde de zinc, de l'oxyde d'indium et/ou de l'oxyde de titane, qui est(sont) dopé(s) avec du gallium, de l'aluminium, de l'indium, du thallium, du germanium, de l'étain, du phosphore, de l'arsenic, de l'antimoine, du sélénium, du tellure, du molybdène, du tungstène et/ou du fluor.

5. Pigment électriquement conducteur selon la revendication 3 ou 4, **caractérisé en ce que** la couche électriquement conductrice est constituée par un oxyde d'étain dopé.

6. Pigment électriquement conducteur selon une ou plusieurs des revendications 1 à 5, **caractérisé en ce qu'**au moins une couche diélectrique est située entre le substrat sous forme de flocons et la couche électriquement conductrice.

7. Pigment électriquement conducteur selon une ou plusieurs des revendications 1 à 6, **caractérisé en ce que** le rapport de la taille de particule moyenne en volume d₉₅ sur la taille moyenne en volume des pigments d5 est supérieur à 7.

8. Pigment électriquement conducteur selon une ou plusieurs des revendications 1 à 7, **caractérisé en ce que** le pigment présente une taille de particule moyenne en volume d₉₅ < 15 µm.

9. Procédé pour la préparation d'un pigment électriquement conducteur selon une ou plusieurs des revendications 1 à 8, **caractérisé en ce qu'**une poudre qui comprend des substrats diélectriques sous forme de flocons, laquelle présente une taille de particule moyenne en volume d₉₅ < 25 µm et dans laquelle au moins 5 % en volume de la poudre présentent une taille de particule < 5 µm, est revêtue dans une suspension aqueuse
- en option, d'une ou de plusieurs couche(s) diélectrique(s), et pour finir
- d'une couche électriquement conductrice.

10. Procédé selon la revendication 9, **caractérisé en ce que** les substrats diélectriques sont des flocons de mica naturel, des flocons de mica synthétique, des flocons de talc, des flocons de kaolin, des flocons de séricite, des flocons d'oxyde d'aluminium, des flocons de dioxyde de silicium, des flocons de verre ou des mélanges de deux de ces types de flocons ou plus.

11. Procédé selon la revendication 9 ou 10, **caractérisé en ce que** la poudre comprenant des substrats diélectriques sous forme de flocons est revêtue d'une couche électriquement conductrice qui comprend un ou plusieurs oxyde(s) métallique(s) dopé(s).

12. Utilisation d'un pigment électriquement conducteur selon une ou plusieurs des revendications 1 à 8 dans des peintures, des revêtements, des encres d'impression, des matières plastiques, des compositions de revêtement, des capteurs, des applications de sécurité, pour le marquage laser, dans des revêtements de sol, des films, des formulations, des matériaux de céramique, des verres ou des papiers.

13. Utilisation selon la revendication 12, **caractérisée en ce que** le pigment électriquement conducteur est utilisé dans des peintures, des revêtements, des encres d'impression, des matières plastiques, des compositions de revêtement, des revêtements de sol, des films ou des matériaux de céramique qui présentent une concentration en masse de pigments dans la plage de 25 à 60%.
